# EUROPEAN PATENT APPLICATION

(11) **EP 4 280 490 A1**
(43) Date of publication of application: **22.11.2023**
(21) Application number: 21921865.8
(22) Date of filing: 29.01.2021
(51) Int. Cl.: H04L 1/00

(54) **DATA TRANSMISSION METHOD AND APPARATUS**

(71) Applicant: Huawei Technologies Co., Ltd., Shenzhen, Guangdong 518129 (CN)
(72) Inventor: LI, Xiaowei, Shenzhen, Guangdong 518129 (CN); ZHANG, Zhenxing, Shenzhen, Guangdong 518129 (CN); JIN, Junhao, Shenzhen, Guangdong 518129 (CN); QIAN, Guang, Shenzhen, Guangdong 518129 (CN); WANG, Jingjing, Shenzhen, Guangdong 518129 (CN)
(74) Representative: Gill Jennings & Every LLP
(86) International application number: PCT/CN2021/074444
(87) International publication number: WO 2022/160260

(57) **Abstract**

A data transmission method and apparatus are provided, to resolve a problem that because an interface circuit needs to be switched, transmission quality of service data is affected due to a problem such as a delay or a loss that may be caused during transmission of the service data. A specific solution is as follows: obtaining service data; and sending first data, where the first data is obtained based on the service data, where a data structure of the first data is the same as a data structure of second data, the second data is for performing link training, and the link training is performed before the first data is sent.

## Description

### TECHNICAL FIELD

Embodiments of this application relate to the communications field, and in particular, to a data transmission method and apparatus.

### BACKGROUND

Currently, as users have an increasingly higher requirement on audio and video experience, an amount of audio and video data is increasingly large. Therefore, a higher requirement is imposed on a data transmission rate for transmitting the audio and video data on a link.

To facilitate stable high-rate data transmission (for example, audio and video data transmission) on a transmission link, a link training method may be used, to adjust a data transmission parameter. For example, the parameter adjustment process may include determining a data transmission rate and the like. Then, a source and a sink may transmit service data based on an adjusted parameter, to ensure quality and stability of service data transmission.

In a conventional technology, an interface circuit is disposed in both the source and the sink. The interface circuits may be connected through a transmission line, to implement data transmission from the source to the sink. In a link training process, the source may send a training pattern by using an interface circuit corresponding to the training pattern. Correspondingly, the sink may receive the training pattern by using an interface circuit corresponding to the training pattern.

After completing the link training, both the source and the sink need to switch their respective interface circuits to interface circuits that match the service data transmission, to transmit the service data. The interface circuit corresponding to the training pattern and the interface circuit matching the service data transmission may be different interface circuits disposed in the source and the sink. In other words, at least two interface circuits need to be disposed at both a transmitter and a receiver, to respectively match the training pattern sending process and the service data transmission process.

It may be understood that, because an interface circuit needs to be switched, problems such as a delay and a loss may be caused during transmission of service data, affecting transmission quality of the service data.

### SUMMARY

Embodiments of this application provide a data transmission method and apparatus, to avoid a switching process between link training and data transmission, thereby avoiding a data processing failure in the switching process, and improving data transmission quality.

To achieve the foregoing objectives, the following technical solutions are used in embodiments of this application.

According to a first aspect, a data transmission method is provided. The method includes: obtaining service data; and sending first data, where the first data is obtained based on the service data, where a data structure of the first data is the same as a data structure of second data, the second data is for performing link training, and the link training is performed before the first data is sent.

Based on this solution, a solution in which link training and service data transmission can be implemented without interface circuit switching is provided. In this example, a transmitter may transmit the service data by sending the first data. The data structure of the first data may be the same as the data structure of the second data sent in the link training process. In this way, in a process of sending the second data and the first data, the transmitter does not need to switch an interface circuit. Therefore, a data transmission failure caused by the switching of the interface circuit does not occur, thereby improving transmission quality of the service data. In addition, two interface circuits do not need to be disposed at the transmitter to match the link training process and the service data transmission process. This can facilitate miniaturization of a source, and reduce hardware costs.

In a possible design, the first data includes a first identifier, and the first identifier identifies that the first data is data that is in service data transmission. Based on this solution, a specific example of the first data is provided. For example, the first data may include the first identifier, to indicate that the first data is data that is in the service data transmission. In other words, the first data may include the service data.

It may be understood that in this application, because the first data and the second data have a same data structure, the transmitter and a receiver may determine, based on the first identifier, that the first data is for transmitting the service data, to distinguish between data in the service transmission process and data in the link training process.

In a possible design, before the sending first data, the method further includes: sending the second data, where the second data is obtained based on a training pattern, and the training pattern is for performing the link training. The second data includes a second identifier, and the second identifier indicates that the second data is for performing the link training.

Based on this solution, a solution of performing link training before the service data transmission is provided. In this example, the transmitter may perform link training before sending the first data. For example, the transmitter sends the second data including the training pattern. Because the data structure of the second data is the same as that of the first data, after completing the link training, the transmitter can directly send the first data without switching an interface circuit. Similar to the foregoing solution, the second data may include the second identifier, so that the transmitter and the receiver determine that the second data is for transmission during the link training, thereby achieving an effect of distinguishing data in the service transmission process from data in the link training process.

In a possible design, that a data structure of the first data is the same as a data structure of second data includes: the first data includes at least two first identifiers that are spaced from each other, there is a same spacing between every two adjacent first identifiers, and the service data is arranged between two adjacent first identifiers; the second data includes at least two second identifiers that are spaced from each other, there is a same spacing between every two adjacent second identifiers, and the training pattern is arranged between two adjacent second identifiers; and a spacing between any two adjacent first identifiers is the same as a spacing between any two adjacent second identifiers.

Based on this solution, a specific limitation on the data structure of the first data and the data structure of the second data is provided. In this example, a normalized data structure in this application is provided. The data structure may include a data identifier (for example, the first identifier or the second identifier) and a data block (for example, the service data or the training pattern). A data block may be arranged between any two adjacent data identifiers, and there is a same spacing between every two adjacent data identifiers. Both the service transmission data and the training data may be correspondingly arranged based on the foregoing data structure, to implement a transmission effect of the normalized data structure. Because both the service transmission data and the training data have the foregoing data structure, the service transmission data and the training data may be sent by using a same interface circuit. In this way, the transmitter can send data with no need to switch an interface circuit. Therefore, a data transmission failure caused by the switching of the interface circuit does not occur, thereby improving transmission quality of the service data. In addition, two interface circuits do not need to be disposed at the transmitter to match the link training process and the service data transmission process. This can facilitate miniaturization of a source, and reduce hardware costs.

In a possible design, the first data further includes a third identifier, where the third identifier is for character delimitation, inter-channel alignment processing, and/or periodic link locking detection during transmission of the service data; and the third identifier is arranged between the first identifier and the service data.

Based on this solution, an example of another composition of the first data in this application is provided. In this example, the first data may further include the third identifier for data availability detection. In this way, the receiver may perform availability detection such as character delimitation, inter-channel alignment processing, and/or periodic link locking detection on the received data based on the third identifier, to determine whether the data is available, to continue subsequent processing.

In a possible design, the second data further includes a fourth identifier, where the fourth identifier is for character delimitation, inter-channel alignment processing, and/or periodic link locking detection during the link training; and the fourth identifier is arranged between the second identifier and the training pattern.

Based on this solution, an example of another composition of the second data in this application is provided. In this example, the second data may further include the fourth identifier for data availability detection. In this way, the receiver may perform availability detection such as character delimitation, inter-channel alignment processing, and/or periodic link locking detection on the received data based on the fourth identifier, to determine whether the data is available, to continue subsequent processing. In some examples, the fourth identifier may be the same as the third identifier carried in the first data. In this way, related data of data availability detection performed during the link training may be used in a service data transmission process, thereby achieving a data multiplexing effect and improving system transmission efficiency.

In a possible design, the first identifier is a special character scramble reset SR; and the second identifier is a special character training pattern scramble reset TPSR. Based on this solution, a specific implementation of the first identifier and/or the second identifier is provided. It should be noted that, in some implementations, character lengths of the first identifier SR and the second identifier TPSR may be the same, for example, both are 1 byte. It may be understood that this example is merely an implementation of the first identifier and the second identifier. In other implementations of this application, the first identifier and/or the second identifier may be different from those in the example. This is not limited in this application.

It should be noted that, in the foregoing solution example, link training is performed before the service data transmission. In other implementations of this application, in the service data transmission process or after transmission of current service data is completed, link training may be further performed to obtain a better data transmission effect.

According to a second aspect, a data transmission method is provided. The method includes: receiving first data, where the first data is obtained based on service data; and obtaining the service data based on the first data, where a data structure of the first data is the same as a data structure of second data, the second data is for performing link training, and the link training is performed before the first data is received.

In a possible design, the first data includes a first identifier, and the first identifier identifies that the first data is data that is in service data transmission.

In a possible design, before the receiving first data, the method further includes: receiving the second data, where the second data is obtained based on a training pattern, and the training pattern is for performing the link training. The second data includes a second identifier, and the second identifier indicates that the second data is for performing the link training.

In a possible design, an equalization parameter is determined based on the second data. The receiving first data includes: receiving the first data based on the equalization parameter.

In a possible design, that a data structure of the first data is the same as a data structure of second data includes: the first data includes at least two first identifiers that are spaced from each other, there is a same spacing between every two adjacent first identifiers, and the service data is arranged between two adjacent first identifiers; the second data includes at least two second identifiers that are spaced from each other, there is a same spacing between every two adjacent second identifiers, and the training pattern is arranged between two adjacent second identifiers; and a spacing between any two adjacent first identifiers is the same as a spacing between any two adjacent second identifiers.

In a possible design, the first data further includes a third identifier, where the third identifier is for character delimitation, inter-channel alignment processing, and/or periodic link locking detection during transmission of the service data; and the third identifier is arranged between the first identifier and the service data.

In a possible design, the second data further includes a fourth identifier, where the fourth identifier is for character delimitation, inter-channel alignment processing, and/or periodic link locking detection during the link training; and the fourth identifier is arranged between the second identifier and the training pattern.

In a possible design, the first identifier is a special character scramble reset SR; and the second identifier is a special character training pattern scramble reset TPSR.

According to a third aspect, a data transmission apparatus is provided. The apparatus includes: an obtaining unit, configured to obtain service data; and a sending unit, configured to send first data, where the first data is obtained based on the service data, where a data structure of the first data is the same as a data structure of second data, the second data is for performing link training, and the link training is performed before the first data is sent.

In a possible design, the first data includes a first identifier, and the first identifier identifies that the first data is data that is in service data transmission.

In a possible design, the sending unit is further configured to send the second data, where the second data is obtained based on a training pattern, and the training pattern is for performing the link training. The second data includes a second identifier, and the second identifier indicates that the second data is for performing the link training.

In a possible design, that a data structure of the first data is the same as a data structure of second data includes: the first data includes at least two first identifiers that are spaced from each other, there is a same spacing between every two adjacent first identifiers, and the service data is arranged between two adjacent first identifiers; the second data includes at least two second identifiers that are spaced from each other, there is a same spacing between every two adjacent second identifiers, and the training pattern is arranged between two adjacent second identifiers; and a spacing between any two adjacent first identifiers is the same as a spacing between any two adjacent second identifiers.

In a possible design, the first data further includes a third identifier, where the third identifier is for character delimitation, inter-channel alignment processing, and/or periodic link locking detection during transmission of the service data; and the third identifier is arranged between the first identifier and the service data.

In a possible design, the second data further includes a fourth identifier, where the fourth identifier is for character delimitation, inter-channel alignment processing, and/or periodic link locking detection during the link training; and the fourth identifier is arranged between the second identifier and the training pattern.

In a possible design, the first identifier is a special character scramble reset SR; and the second identifier is a special character training pattern scramble reset TPSR.

According to a fourth aspect, a data transmission apparatus is provided. The apparatus includes: a receiving unit, configured to receive first data, where the first data is obtained based on service data; and an obtaining unit, configured to obtain the service data based on the first data, where a data structure of the first data is the same as a data structure of second data, the second data is for performing link training, and the link training is performed before the first data is sent.

In a possible design, the first data includes a first identifier, and the first identifier identifies that the first data is data that is in service data transmission.

In a possible design, the receiving unit is further configured to receive the second data, where the second data is obtained based on a training pattern, and the training pattern is for performing the link training. The second data includes a second identifier, and the second identifier indicates that the second data is for performing the link training.

In a possible design, the apparatus further includes: a determining unit, configured to determine an equalization parameter based on the second data. The receiving unit is further configured to receive the second data based on the equalization parameter.

In a possible design, that a data structure of the first data is the same as a data structure of second data includes: the first data includes at least two first identifiers that are spaced from each other, there is a same spacing between every two adjacent first identifiers, and the service data is arranged between two adjacent first identifiers; the second data includes at least two second identifiers that are spaced from each other, there is a same spacing between every two adjacent second identifiers, and the training pattern is arranged between two adjacent second identifiers; and a spacing between any two adjacent first identifiers is the same as a spacing between any two adjacent second identifiers.

In a possible design, the first data further includes a third identifier, where the third identifier is for character delimitation, inter-channel alignment processing, and/or periodic link locking detection during transmission of the service data; and the third identifier is arranged between the first identifier and the service data.

In a possible design, the second data further includes a fourth identifier, where the fourth identifier is for character delimitation, inter-channel alignment processing, and/or periodic link locking detection during the link training; and the fourth identifier is arranged between the second identifier and the training pattern.

In a possible design, the first identifier is a special character scramble reset SR; and the second identifier is a special character training pattern scramble reset TPSR.

According to a fifth aspect, a source apparatus is provided. The source includes one or more processors and a transmission interface. The one or more processors send or receive data through the transmission interface, and the one or more processors are configured to invoke program instructions stored in one or more memories, so that the source apparatus performs the data transmission method according to any one of the first aspect or the possible designs of the first aspect.

According to a sixth aspect, a sink apparatus is provided. The sink includes one or more processors and a transmission interface. The one or more processors send or receive data through the transmission interface, and the one or more processors are configured to invoke program instructions stored in one or more memories, so that the sink apparatus performs the data transmission method according to any one of the second aspect or the possible designs of the second aspect.

According to a seventh aspect, a computer-readable storage medium is provided. The computer-readable storage medium stores program instructions. When the program instructions are executed on a computer or a processor, the data transmission method according to any one of the first aspect or the possible designs of the first aspect or the data transmission method according to any one of the second aspect or the possible designs of the second aspect is performed.

According to an eighth aspect, a computer program product is provided. The computer program product includes instructions. When the computer program product runs on a computer, the computer is enabled to perform, according to the instructions, the data transmission method according to any one of the first aspect or the possible designs of the first aspect or the data transmission method according to any one of the second aspect or the possible designs of the second aspect is performed.

According to a ninth aspect, a chip system is provided. The chip system includes an interface circuit and a processor. The interface circuit and the processor are interconnected through a line. The interface circuit is configured to receive a signal from a memory and send a signal to the processor, where the signal includes computer instructions stored in the memory. When the processor executes the computer instructions, the chip system performs the data transmission method according to any one of the first aspect and the possible designs of the first aspect or the data transmission method according to any one of the second aspect and the possible designs of the second aspect.

It should be understood that technical features of the technical solutions provided in the second aspect, the third aspect, the fourth aspect, the fifth aspect, the sixth aspect, the seventh aspect, the eighth aspect, and the ninth aspect may all correspond to those of the first aspect and the possible designs of the first aspect. Therefore, beneficial effects that can be achieved are similar, and details are not described herein again.

### BRIEF DESCRIPTION OF DRAWINGS

FIG. 1 is a schematic diagram of a data transmission procedure;
FIG. 2a is a schematic diagram of a data structure of training data;
FIG. 2b is a schematic diagram of a data structure of service data;
FIG. 3 is a schematic flowchart of timing of data transmission;
FIG. 4a is a schematic diagram of a data structure according to an embodiment of this application;
FIG. 4b is a schematic diagram of a data structure of service transmission data according to an embodiment of this application;
FIG. 4c is a schematic diagram of a data structure of training data according to an embodiment of this application;
FIG. 5 is a schematic diagram of a data structure of service transmission data and training data according to an embodiment of this application;
FIG. 6 is a schematic composition diagram of service transmission data according to an embodiment of this application;
FIG. 7 is a schematic composition diagram of a data transmission system according to an embodiment of this application;
FIG. 8 is a schematic composition diagram of another data transmission system according to an embodiment of this application;
FIG. 9 is a schematic composition diagram of a sending module according to an embodiment of this application;
FIG. 10 is a schematic composition diagram of a receiving module according to an embodiment of this application;
FIG. 11 is a schematic flowchart of a data transmission method according to an embodiment of this application;
FIG. 12 is a schematic flowchart of timing of data transmission according to an embodiment of this application;
FIG. 13 is a schematic composition diagram of a data transmission apparatus according to an embodiment of this application;
FIG. 14 is a schematic composition diagram of another data transmission apparatus according to an embodiment of this application; and
FIG. 15 is a schematic composition diagram of a source according to an embodiment of this application.

### DESCRIPTION OF EMBODIMENTS

To ensure smooth service data transmission, link training may be performed before service data transmission is performed. Through the link training, a sink (for example, receiver for short) may determine a related parameter (for example, an equalization parameter or a service data transmission rate) for the service data transmission, so that after completing the link training, a source (for example, transmitter for short) and the receiver may transmit service data based on the related parameter, determined through the link training, of the service data transmission.

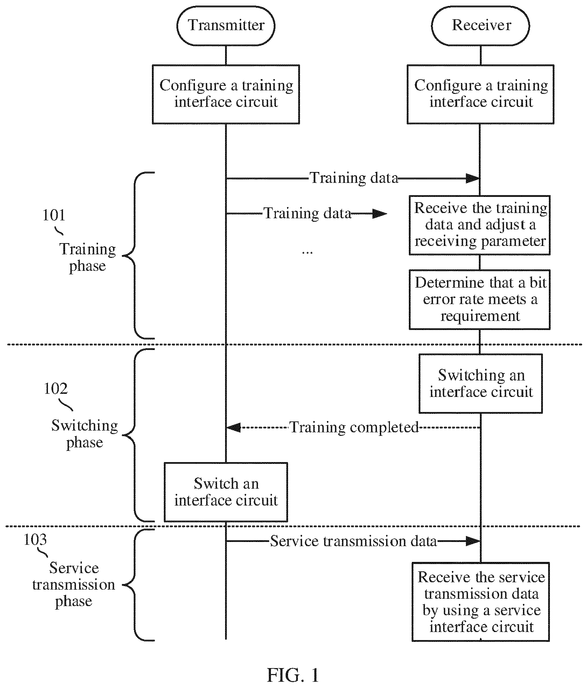

For example, FIG. 1 is a schematic flowchart of data transmission. In this example, before the service data transmission (for example, data transmission performed in a service transmission phase 103) is performed, the transmitter and the receiver may perform data transmission in a training phase 101 and a switching phase 102.

The training phase 101 may be a phase in which link training is performed. For example, the transmitter may send training data to the receiver. The training data may include a training pattern, and the training pattern may be a data sequence that simulates data of a high-speed interface. For example, the data sequence for the data of the high-speed interface may be approximate to a data sequence of service data to be subsequently sent. The training data may further include a special identifier. The special identifier may be used by the receiver to perform tests such as character delimitation, inter-channel alignment, and periodic boundary stability detection, to ensure that currently received data is available. In the training phase 101, the transmitter may repeatedly send the training data, so that the receiver may determine a transmission status corresponding to a current equalization parameter by adjusting the equalization parameter and repeatedly receiving the training data.

As shown in FIG. 1, the receiver may receive, in the training phase 101, the training data that includes the training pattern. The receiver may adjust a related parameter (for example, the equalization parameter) of data transmission based on the training pattern.

It may be understood that a packet loss, deformation, or the like may occur in the data transmission process. Therefore, the data received by the receiver may be different from the training pattern sent by the transmitter. Apparently, a smaller difference between the data received by the receiver and the training pattern sent by the transmitter indicates more favorable data transmission. In this example, the receiver may adjust the equalization parameter, so that a difference between the received data and the data sent by the transmitter is within an acceptable range, thereby ensuring transmission quality of subsequent data (for example, service data). For example, a difference between the data received by the receiver and the data sent by the transmitter may be identified by using a bit error rate. A higher bit error rate indicates a larger difference between the data received by the receiver and the data sent by the transmitter, and poorer transmission quality. On the contrary, a lower bit error rate indicates a smaller difference between the data received by the receiver and the data sent by the transmitter, and better transmission quality.

In an embodiment, the receiver may exchange the training pattern with the transmitter before starting the training phase 101, so that the receiver may know the training pattern sent by the transmitter. In the training phase 101, the receiver may receive and parse the data from the transmitter, and compare a parsing result with the training pattern to determine a bit error rate specific to a current equalization parameter. If the bit error rate is high, the receiver may adjust the current equalization parameter, and continue to receive new training data based on an adjusted equalization parameter. The foregoing parsing and comparison processes are repeated to determine a bit error rate corresponding to the adjusted equalization parameter. The rest may be deduced by analogy until a better bit error rate cannot be obtained by adjusting an equalization parameter. In this case, the equalization parameter may be an optimal parameter at a current data transmission rate. Correspondingly, a bit error rate of data transmission performed based on the equalization parameter may be considered as an optimal bit error rate at the current data transmission rate. It may be understood that different optimal bit error rates can be achieved at different data transmission rates. In this example, if the transmitter determines that the optimal bit error rate at the current data transmission rate still cannot meet a data transmission requirement, the transmitter may indicate, by using an auxiliary path, the receiver to adjust the data transmission rate.

The receiver may adjust the data transmission rate, and cyclically continue to perform the data transmission process in the training phase 101 shown in FIG. 1, until the transmitter determines that the bit error rate is acceptable. The receiver may notify, through the auxiliary channel, the transmitter that training has been completed. In some implementations, the receiver may further send the determined equalization parameter to the transmitter through the auxiliary path, so that the transmitter sends subsequent service data based on the equalization parameter.

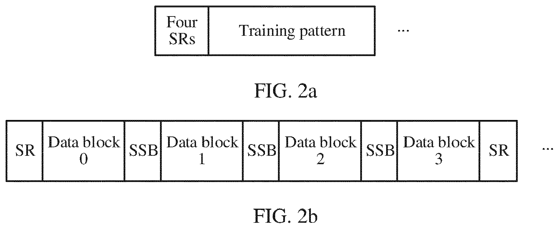

In an example, FIG. 2a shown a data structure of the training data. This data structure can be used for link training in a framework of a high definition multimedia interface (high definition multimedia interface, HDMI) 2.1 protocol.

In this example, the training data may include four special characters scramble resets (Scramble Reset, SR) and a training pattern arranged following the SRs. The four SRs may be used by the receiver to test whether data is available. In the training phase 101, the transmitter may cyclically send the training data shown in FIG. 2a. For example, data including the four SRs and the training pattern is sent in a first sending period. Then, the transmitter may perform sending in a second sending period, to be specific, continue to send the data including SRs and a training pattern after the previous training pattern. The rest may be deduced by analogy until link training is completed.

After the link training is completed, the receiver and the transmitter may prepare for service data transmission (that is, perform an operation of the switching phase 102 shown in FIG. 1). For example, the receiver and the transmitter may separately switch their respective interface circuits, to match data in the subsequent service transmission phase 103.

It should be noted that, in a framework of a current transmission protocol (for example, HDMI 2.1), a data structure of training data is different from a data structure of service transmission data in the service transmission phase 103. For example, refer to FIG. 2a. As described above, the data structure of the training data may be in a form of four SRs and a training pattern. FIG. 2b shows a data structure of the service transmission data. As shown in the figure, the data structure of the service transmission data may include a special identifier and a data block of service data. For example, the special identifier may include an SR or a special character start superblock (Start Superblock, SSB). A data block of the service data may be inserted between two adjacent special identifiers. Any group of four consecutive data blocks in the data structure of the service transmission data includes three data blocks with SSBs as special identifiers and one data block with an SR as a special identifier, and the three data blocks with the SSBs as the special identifiers are consecutively arranged. For example, in a data frame of the service transmission data, a structure of SR + data block 0 + SSB + data block 1 + SSB + data block 2 + SSB + data block 3 + SR may be cyclically arranged.

It can be learned that a data structure of data (for example, the training data) transmitted in the training phase 101 is different from a data structure of data (for example, the service transmission data) transmitted in the service transmission phase 103. Different data structures require different interface circuits to implement correct transmission. In this way, two interface circuits corresponding to the training data and the service transmission data need to be separately disposed at the transmitter and the receiver, to perform corresponding data transmission by using the corresponding interface circuits.

For example, the transmitter is used as an example. An interface circuit (for example, a training sending interface for short) corresponding to a training pattern and an interface circuit (for example, a service sending interface for short) corresponding to service data may be disposed at the transmitter. In the link training phase 101, the transmitter may send the training data including the training pattern through the training sending interface. However, before the service data needs to be sent, the transmitter needs to switch the interface circuit from the training sending interface to the service sending interface, to transmit the service transmission data.

Corresponding to the transmitter, interface circuits corresponding to the training data and the service transmission data may also be disposed at the receiver, to implement receiving of the corresponding data. For example, the interface circuit corresponding to the training data may be a training receiving interface, and the interface circuit corresponding to the service transmission data may be a service receiving interface.

Based on the foregoing descriptions, as shown in FIG. 1, after the training phase 101 is completed, both the transmitter and the receiver need to enter the switching phase 102, to implement interface circuit switching. For example, when it is determined that the link training is completed (for example, a bit error rate meets a requirement), the receiver may switch an interface circuit of the receiver from the training receiving interface to the service receiving interface. The receiver may further notify, through an auxiliary channel, the transmitter that feedback training is completed. After receiving a message indicating that the training is completed, the transmitter may switch an interface circuit of the transmitter from the training sending interface to the service sending interface. Therefore, the operation of the switching phase 102 is completed.

Then, the transmitter and the receiver may start to transmit the service data (that is, enter the service transmission phase 103). For example, the transmitter may send the service transmission data through the service sending interface. For example, the transmitter may send the service transmission data according to the data structure shown in FIG. 2b. Correspondingly, the receiver receives the service transmission data through the service receiving interface, to transmit the service data.

Based on the foregoing descriptions, in an existing data transmission framework, after the link training is completed and before the service data transmission starts, both the transmitter and the receiver need to perform interface circuit switching. However, in specific implementation, interface circuit switching at the transmitter is not strictly consistent with that at the receiver, causing a problem in the service data transmission.

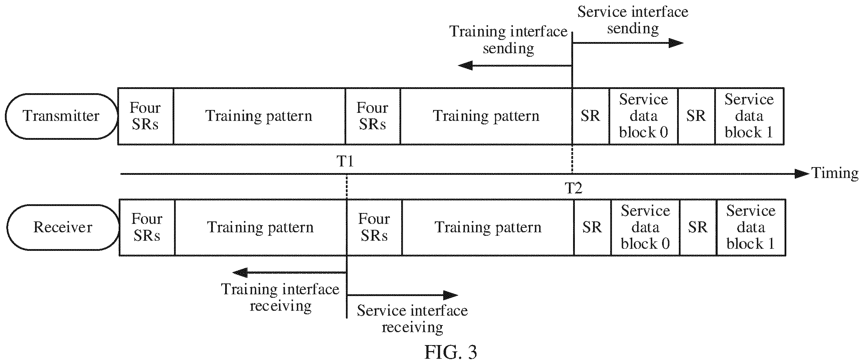

For example, FIG. 3 is a schematic logic diagram of timing of data transmission. In this example, the receiver may determine, after receiving four SRs and a training pattern, that link training is completed. In this case, at a moment T1, the receiver may perform interface circuit switching, for example, switching from the training receiving interface to the service receiving interface. In other words, after the moment T1, the receiver may perform processing such as parsing on received data through the service interface. With reference to the schematic flowchart in FIG. 1, after determining that the link training is completed, the receiver may notify the transmitter that the link training is completed. Correspondingly, the transmitter may switch the interface circuit at the moment T2, for example, switch from the training sending interface to the service sending interface. In other words, after the moment T2, the transmitter may send the service transmission data through the service sending interface.

Before the moment T2, the transmitter may continue to send data through the training sending interface. In other words, the transmitter may send the training data through the training sending interface between the moment T1 and the moment T2. Therefore, between the moment T1 and the moment T2, the receiver may receive the training data through the service receiving interface.

It should be noted that, at the receiver, a process of processing the data after the data is received through the service receiving interface is performed based on a data structure (for example, the data structure shown in FIG. 2b) of the service transmission data. In this case, between the moment T1 and the moment T2, the receiver processes the training data based on the data structure of the service transmission data. As a result, the receiver fails to process the received data. Consequently, receiving of subsequent service data is affected.

In other words, in a current transmission protocol framework, the transmitter and the receiver need to perform interface circuit switching between the training phase 101 and the service transmission phase 103. However, due to the interface circuit switching, the receiver cannot correctly process the received data, and consequently, a problem such as a packet loss or a parsing error occurs in the service data transmission. As a result, quality of the service data transmission is affected.

In addition, with reference to the foregoing descriptions, the transmitter needs to detect the data after receiving the data. However, because the data structures of the service transmission data and the training data are different, detection data in the training phase 101 cannot be reused as a reference in the service transmission phase 103, and detection needs to be performed again. Therefore, power consumption overheads of the receiver are further caused.

As shown in FIG. 1, the transmitter and the receiver need to use different interface circuits to exchange data in the training phase 101 and the data transmission phase. Therefore, before the training phase 101 is performed, the transmitter and the receiver further need to be initialized. In the initialization process, the transmitter and the receiver may switch interface circuits currently for data transmission to training interfaces for link training. For example, the transmitter needs to switch the interface circuit to the training sending interface. For another example, the receiver needs to switch the interface circuit to the training receiving interface. This also increases complexity of a data transmission process.

To resolve the foregoing problems, embodiments of this application provide a new normalized data structure. The normalized data structure may be applicable to training data transmitted in the training phase 101, or may be applicable to service transmission data transmitted in the service transmission phase 103. Due to consistency of data structures, the transmitter and the receiver may not need to separately configure different interface circuits for link training and service data transmission. In addition, because both the transmitter and the receiver may perform link training and service data transmission by using a same set of interface circuits, and a data identifier used in the link training and a data identifier used in a service transmission phase include different identifiers, a case in which data processing fails because the receiver receives data by using an interface circuit that does not match the received data in the foregoing descriptions does not occur. In this way, the receiver can quickly and accurately receive and process data, thereby improving data transmission quality. In addition, only one set of interface circuits needs to be configured at both the transmitter and the receiver to match a link training process and a service data transmission process. Therefore, this can facilitate miniaturization of the source and the sink, and reduce hardware costs.

The following describes the technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

In addition, the data transmission architecture and the corresponding data transmission scenario described in embodiments of this application are for describing the technical solutions in embodiments of this application more clearly, and do not constitute a limitation on the technical solutions provided in embodiments of this application. A person of ordinary skill in the art may learn that, as service transmission requirements are continuously updated, the technical solutions provided in embodiments of this application are also applicable to a similar technical problem.

The following first describes, by using an example, the normalized data structure in the technical solutions provided in embodiments of this application.

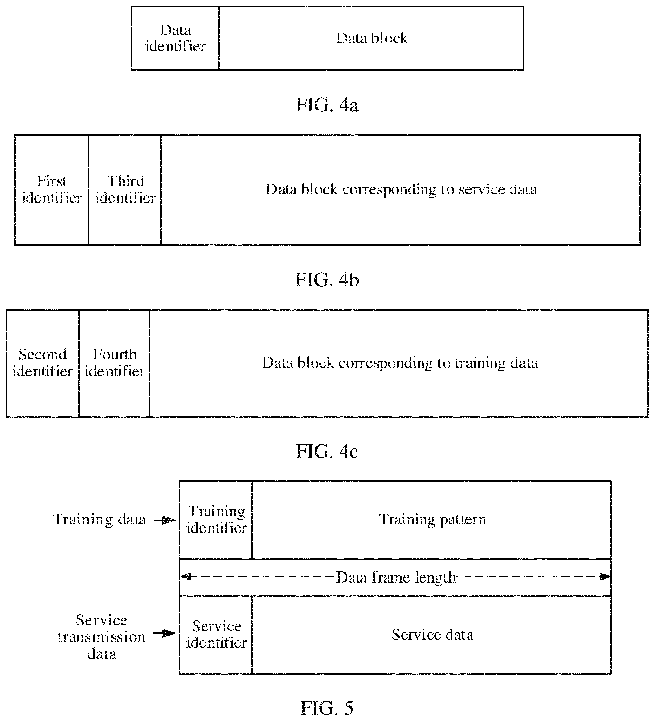

FIG. 4a is a schematic diagram of a data structure according to an embodiment of this application. The data structure may be applied to link training and service transmission.

The data structure may include a data identifier and a data block. The data identifier may be for identifying that the data is for performing link training or service data transmission. For example, the data identifier may include a first identifier or a second identifier. When the data identifier includes the first identifier, the data identifier may indicate that current data is data for performing service data transmission. When the data identifier includes the second identifier, the data identifier may indicate that current data is for performing link training.

In some implementations of this application, the data identifier may be further for detection. For example, a receiver may perform character delimitation, inter-channel alignment, periodic boundary stability detection, and the like based on the data identifier. In some embodiments, when the data structure shown in FIG. 4a is applied to service data transmission, the data identifier may further include a third identifier, where the third identifier may be used by the receiver to perform character delimitation, inter-channel alignment processing, and/or periodic link locking detection during the service data transmission. In some other embodiments, when the data structure shown in FIG. 4a is applied to link training, the data identifier may further include a fourth identifier, where the fourth identifier may be for performing character delimitation, inter-channel alignment processing, and/or periodic link locking detection during the link training. The third identifier and the fourth identifier may be the same or may be different. It should be noted that, the third identifier and the fourth identifier may be for data availability detection during data transmission. In some scenarios in which data availability detection does not need to be performed or in which a requirement for data availability is low, the data identifier may not include the third identifier or the fourth identifier.

For example, FIG. 4b is a schematic diagram of a data structure of service transmission data that includes a third identifier. To-be-sent service transmission data may include the first identifier, to indicate that the data is service transmission data. The service transmission data may include a third identifier, which is used by the receiver to perform availability detection on the data. The service transmission data may further include a data block corresponding to service data. Correspondingly, FIG. 4c is a schematic diagram of a data structure of training data that includes a fourth identifier. To-be-sent training data may include the second identifier, to indicate that the data is training data. The training data may include a fourth identifier, which is used by the receiver to perform availability detection on the data. The training data may further include a data block corresponding to the training data. For example, the data block corresponding to the training data may be a training pattern.

As shown in FIG. 4a, a data block may be arranged after the data identifier. The data block may be data that needs to be transmitted during the link training or the service data transmission. For example, during the link training, the data block may include a training pattern. For another example, during the service data transmission, the data block may include service data. It should be noted that when the service data is huge, one data block may be a part of data in the service data. A transmitter and the receiver may transmit the service data by transmitting data with the data structure shown in FIG. 4a for a plurality of times.

In an example, FIG. 5 is a schematic diagram of comparison between training data and service transmission data that have the data structure shown in FIG. 4a. In the training data, the data identifier may be referred to as a training identifier. A data block including a training pattern may be arranged after the training identifier. In the service transmission data, the data identifier may be referred to as a service identifier. A data block including service data may be arranged after the service identifier. It can be learned that because the service transmission data and the training data have a same data structure (that is, data frame lengths are the same), the transmitter and the receiver do not need to separately use different interface circuits to perform link training or service data transmission.

In some implementations, the first identifier in the training identifier included in the training data may be an SR, and the second identifier in the service identifier included in the service transmission data may be a special character training pattern scramble reset (Training pattern Scramble Reset, TPSR).

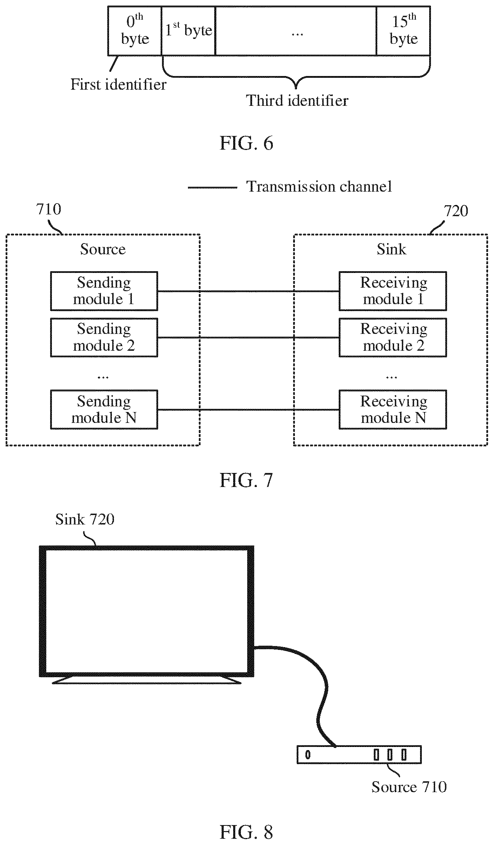

When the third identifier or the fourth identifier is arranged in the data identifier, FIG. 6 shows a schematic diagram of a data structure of the service transmission data. In this example, the data identifier of the service transmission data may include data of 16 bytes (bytes) in total from the 0^{th} byte to the 15^{th} byte. The 0^{th} byte may be for setting the first identifier, to determine that the data is the service transmission data during the service data transmission. The 1^{st} byte to the 15^{th} byte may be for setting the third identifier, to perform data availability detection. For example, data for performing data availability detection may be separately padded at the 1^{st} byte to the 15^{th} byte. To describe composition of the service transmission data more clearly, the following Table 1 shows configuration of each byte included in the service transmission data.

**Table 1**

| | |
|---|---|
| 0^{th} byte | =SR |
| 1^{st} byte | 0xFF |
| 2^{nd} byte | 0x4B |
| 3^{rd} byte | 0xDC |
| 4^{th} byte | 0x1B |
| 5^{th} byte | 0x17 |
| 6^{th} byte | 0x9D |
| 7^{th} byte | 0x93 |
| 8^{th} byte | 0x4B |
| 9^{th} byte | 0xDC |
| 10^{th} byte | 0x1B |
| 11^{th} byte | Ox17 |
| 12^{th} byte | 0x9D |
| 13^{th} byte | 0x93 |
| 14^{th} byte | 0xEE |
| 15^{th} byte | 0x11 |

In this way, before sending the service data, the transmitter may configure a corresponding identifier in the data identifier in the service transmission data, so that after receiving the service transmission data, the receiver may perform character delimitation, inter-channel alignment processing, and/or periodic link locking detection accordingly.

For example, the receiver transmits data based on a third identifier of the service data (for example, the third identifier may correspond to data of the 1st bit to the 15th bit shown in Table 1). It may be understood that in a service data transmission process, the receiver may receive a plurality of pieces of service transmission data through a transmission channel. The service transmission data may be received in a form of a continuous serial data stream. The receiver may determine a start location of each piece of service transmission data by monitoring data in the serial data stream, and then process each piece of service transmission data. For example, the receiver may monitor a character that periodically appears in the serial data stream and that is the same as data of the 1^{st} byte to the 15^{th} byte shown in Table 1, and use a byte previous to a character corresponding to the 1^{st} byte as a start location of a piece of service transmission data. In this way, character delimitation for the serial data stream can be completed. It may be understood that, after the start location of each piece of service transmission data is determined through character delimitation, the receiver may process the pieces of service transmission data in a parallel (or serial) manner.

It should be noted that, in the foregoing examples shown in FIG. 6 and Table 1, an example in which 16-byte data is set in the data identifier is used for description. In other implementations of this application, a length of the data identifier may alternatively be 8 bytes, 32 bytes, 64 bytes, or more.

Corresponding to the service transmission data, the training data may also include a data identifier similar to that in FIG. 6 or Table 1. For example, the training data may include a data block including a data identifier configured with a length of 16 bytes and a training pattern. A configuration method is similar to the foregoing descriptions and is not described herein again.

In the solution provided in this embodiment of this application, both the training data and the service transmission data that are related may be configured and transmitted based on the data structure in the foregoing example.

FIG. 7 is a schematic composition diagram of a data transmission system according to an embodiment of this application. The data transmission system may include a source 710 and a sink 720. Data may be transmitted between the source 710 and the sink 720 through a transmission channel. The data may be training data that includes a training pattern, or may be service transmission data that includes service data. In some embodiments, a function of the transmission channel may be implemented by a transmission line. One transmission channel may correspond to one transmission line, or one transmission channel may correspond to a plurality of transmission lines.

As shown in FIG. 7, a plurality of sending modules, for example, a sending module 1 to a sending module N, may be disposed in the source 710. Correspondingly, a plurality of receiving modules, for example, a receiving module 1 to a receiving module N, may be disposed in the sink 720. In this example, one sending module may be connected to one receiving module through a transmission channel, to implement data transmission between the source 710 and the sink 720. In some other examples of this application, a quantity of receiving modules in the sink 720 may be different from a quantity of sending modules.

It should be noted that in some other implementations of this application, one sending module may alternatively transmit data to a plurality of receiving modules through one transmission channel. Definitely, one sending module may alternatively transmit data to one or more receiving modules through a plurality of transmission channels.

For example, refer to FIG. 8. The source 710 may be a multimedia transmission apparatus (for example, a television set-top box) shown in FIG. 8, and the sink 720 may be a multimedia playback apparatus (for example, a television) shown in FIG. 8. The transmission channel between the sink 720 and the source 710 may be a data transmission line (for example, an HDMI transmission line) between the television set-top box and the television. The source 710 may send multimedia data (for example, audio and video data) to the sink 720, so that the sink 720 may perform multimedia playback accordingly. Before a transmitter sends multimedia data (that is, service transmission data corresponding to a multimedia service), the source 710 may further perform link training with the sink 720, to prepare for transmission of the service transmission data.

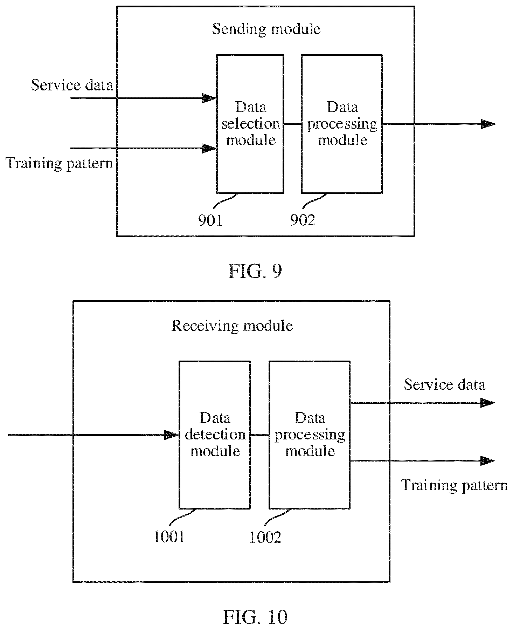

In an implementation, FIG. 9 and FIG. 10 respectively show compositions of a sending module and a receiving module according to an embodiment of this application.

As shown in FIG. 9, a data selection module 901 and a data processing module 902 may be disposed in the sending module. The data selection module 901 may be configured to receive to-be-sent data, and determine whether the data is service data or a training pattern. For example, in link training, the data selection module 901 may be configured to receive to-be-sent data, and determine that the data is a training pattern. For another example, in a service data transmission process, the data selection module 901 may be configured to determine to-be-sent data, and determine that the data is service data. After obtaining the to-be-sent data, the data selection module 901 may mark a corresponding identifier for the data, so that a subsequent processing module (for example, the data processing module 902) may perform corresponding processing on the data based on the identifier of the to-be-sent data.

The data processing module 902 may be configured to perform a processing operation such as encapsulation on the to-be-sent data. For example, the data processing module 902 may encapsulate the to-be-sent data into a plurality of small packets, and configure, for each small packet, a character corresponding to the to-be-sent data currently. It may be understood that the to-be-sent data is usually transmitted to the sending module in a form of a data stream. The data processing module 902 may divide the data stream into a plurality of different small packets based on the normalized data structure provided in this embodiment of this application, and configure a corresponding character for each small packet, to facilitate subsequent sending.

In this example, the data processing module 902 may segment the data stream based on the data structures shown in FIG. 4a to FIG. 6.

For example, the to-be-sent data is a training pattern. After receiving the training pattern, the data selection module 901 may mark a corresponding identifier for a data stream of the training pattern, where the identifier may be for identifying that the current data stream is the training pattern.

It should be noted that, in some implementations, the identifier marked by the data selection module 901 for the data stream may be the same as the second identifier in the data identifier in the foregoing descriptions. For example, the data selection module 901 may mark the data stream with a TPSR identifier. In some other implementations, the identifier marked by the data selection module 901 for the data stream may be different from the second identifier in the data identifier.

The data processing module 902 may divide the data stream of the training pattern into a plurality of pieces of data of a fixed length. The data processing module 902 may further configure a data identifier (for example, a training identifier) corresponding to the training pattern for each piece of data. In this way, after receiving the data, the source 710 determines, based on the carried training identifier, that the current data is the training pattern. In some implementations, the data processing module 902 may further configure a fourth identifier in the training identifier, so that the sink 720 may perform data availability detection based on the fourth identifier.

In some other embodiments, an example in which the to-be-sent data is service data is used. After receiving the service data, the data selection module 901 may mark a corresponding identifier for a data stream of the service data, where the identifier may be for identifying that the current data stream is the service data.

It should be noted that, in some implementations, the identifier marked by the data selection module 901 for the data stream may be the same as the first identifier in the data identifier in the foregoing descriptions. For example, the data selection module 901 may mark the data stream with an SR identifier. In some other implementations, the identifier marked by the data selection module 901 for the data stream may be different from the first identifier in the data identifier.

The data processing module 902 may divide the data stream of the service data into a plurality of pieces of data of a fixed length. A length (for example, a data frame length) of each piece of data may be the same as a data frame length of data obtained through by segmenting the training pattern when the training pattern is sent. The data processing module 902 may further configure a data identifier (for example, a service identifier) corresponding to the service data for each data block. A data frame length of each data identifier may also be the same as a data frame length of the training identifier configured when the training pattern is sent. In this way, after receiving the data, the transmitter determines, based on the carried service identifier, that the current data is the service data. In some implementations, the data processing module 902 may further configure a third identifier in the training identifier, so that the sink 720 may perform data availability detection based on the third identifier.

After obtaining a data block corresponding to the to-be-sent data, the sending module may send the data block to the receiving module at the receiver through a corresponding transmission channel.

FIG. 10 is a schematic composition diagram of the receiving module. The receiving module may include a data detection module 1001 and a data processing module 1002. The data detection module 1001 may be configured to receive data from a corresponding transmission channel, and perform availability detection on the data. For example, the data detection module 1001 may perform character delimitation, inter-channel alignment processing, and/or periodic link locking detection based on a data identifier carried in the received data. Based on a result of the foregoing detection, the data detection module 1001 may determine whether the currently received data is available. When determining that the current data is available, the data detection module 1001 may send the data to the data processing module 1002 for processing such as data parsing, to obtain data that the corresponding transmitter expects to send.

For example, the data receiving and processing module may be configured to acknowledge the received data based on the data identifier. The data receiving module may determine, based on the data identifier carried in the received data, that the data is training data or service transmission data. For example, when the data identifier carries a first identifier (for example, an SR), the data processing module 1002 may determine that the data is service transmission data. For another example, when the data identifier carries a second identifier (for example, a TPSR), the data processing module 1002 may determine that the data is training data.

The data processing module 1002 may be further configured to perform decoding processing on the data, to obtain data that the transmitter expects to send. The data processing module 1002 may send the data to a corresponding back-end processing component, to perform link training or receive service data.

For example, when the received data is training data, the data processing module 1002 may extract the corresponding data block based on the data structure shown in FIG. 4a, and perform a parsing operation such as data restoration on the data block, to obtain an original training pattern. The data processing module 1002 may send the training pattern to a path (or a component) used by a back end to perform link training, so that the receiver can perform link training based on the training pattern.

For another example, when the received data is service transmission data, the data processing module 1002 may extract the corresponding data block based on the data structure shown in FIG. 4a, and perform a parsing operation such as data restoration on the data block, to obtain service data included in the service transmission data. The data processing module 1002 may send the service data to a path (or a component) used by a back end to perform service data processing. It may be understood that the data processing module 1002 may separately transmit, to the back end, service data included in a plurality of pieces of service transmission data, so that the path (or the component) used by the back end to process the service data can obtain a service data stream that the transmitter expects to send.

It may be understood that a function of the data processing module 1002 shown in FIG. 10 is similar to a function of the data processing module 9002 shown in FIG. 9. Effects of the functions of the data processing modules are opposite. Therefore, in some implementations, the data processing module 1002 shown in FIG. 10 may be the same as the data processing module 9002 shown in FIG. 9. Certainly, in some other implementations, the data processing module shown in FIG. 10 may alternatively be different from the data processing module shown in FIG. 9.

In an actual application, the sending module shown in FIG. 9 and the receiving module shown in FIG. 10 may be implemented by components with similar functions. For example, the sending module and/or the receiving module may be interface circuits or the like. In other words, in some implementations, the sending module may correspond to a service/training sending interface in a conventional technology, and the receiving module may correspond to a service/training receiving interface in the conventional technology. In this way, an interface circuit in the link training is consistent with an interface circuit in the service data transmission.

All data transmission methods provided in embodiments of this application can be applied to the data transmission systems shown in FIG. 7 to FIG. 10.

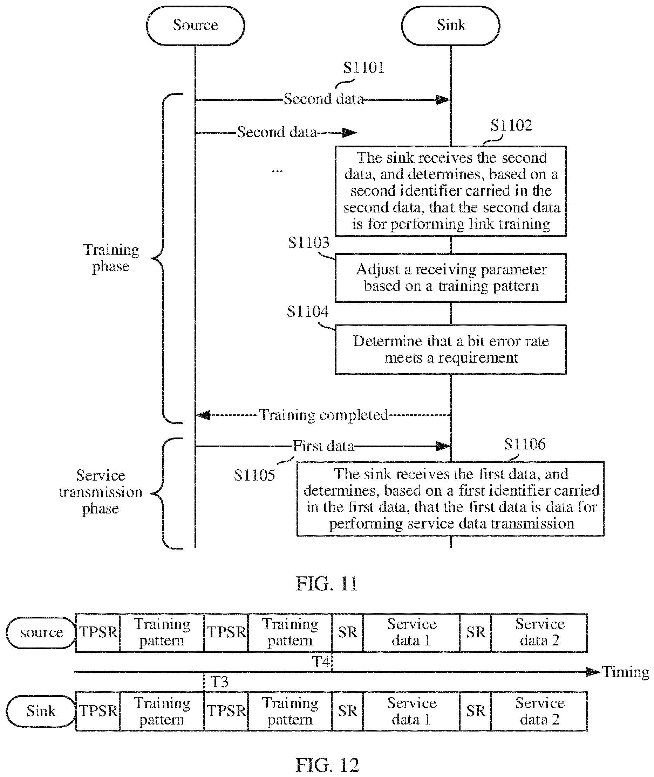

FIG. 11 is a schematic flowchart of a data transmission method according to an embodiment of this application. As shown in the figure, the solution may include the following steps.

S1101. A source sends second data.

In this example, the second data may be for performing link training. It may be understood that, with reference to the foregoing descriptions, the first data may have the data structure described in any one of FIG. 4a to FIG. 7. For example, the second data may include a training identifier and a training pattern. The training identifier may include a second identifier, and the second identifier may be for identifying that the second data is for performing link training. In some implementations, an example in which there is a requirement for data availability detection is used. The training identifier may further include a fourth identifier, and the fourth identifier may be for performing data availability detection. For example, the data availability detection may include character delimitation, inter-channel alignment processing, and/or periodic link locking detection.

In a possible implementation, the second identifier may be a TPSR. For configuration of the fourth identifier and the second identifier, refer to the method for configuring the third identifier and the first identifier shown in FIG. 6 or Table 1.

S1102. A sink receives the second data, and determines, based on the second identifier carried in the second data, that the second data is for performing link training.

In this example, a data structure of training data is the same as that of service transmission data, and no switching phase is required between a training phase and a service transmission phase. That is, data transmission is not interrupted in the training phase and the service transmission phase. A receiver may determine, based on a data identifier of received data, that the data is for performing link training or service data transmission, and perform a subsequent operation accordingly.

For example, in S1102, the sink may receive the second data that carries the second identifier. The sink may determine, based on the second identifier, that the currently received data is for performing link training. For another example, the sink may receive data that carries the second identifier and the fourth identifier. The sink may determine, based on the second identifier, that the second data is for performing link training. The sink may further perform availability detection on the second data based on the fourth identifier. If the second data is available, S1103 is performed.

S1103. The sink adjusts a receive parameter based on a training pattern.

S1104. The sink determines that a bit error rate meets a requirement.

With reference to the descriptions of the training phase in FIG. 1, it may be understood that after receiving the second data for performing link training, the sink may parse the second data to obtain the training pattern.

The sink may adjust a current receiving parameter (for example, an equalization parameter) based on the received training pattern and the preset training pattern sent by the transmitter, to improve the bit error rate of data receiving. When obtaining an optimal bit error rate at a current data transmission rate, the sink may determine whether the current bit error rate can meet the requirement. For example, the receiver may determine a value relationship between the current bit error rate and a preset threshold. When the current bit error rate is greater than the preset threshold, it is considered that the current rate cannot be for transmitting the service data. Correspondingly, when the current bit error rate is less than the preset threshold, it is considered that the current rate may be for transmitting the service data.

In a possible example, the sink may send, to a transmitter, information about whether the current bit error rate meets the requirement. For example, the sink may send the information through an auxiliary link between the source and the sink.

In some embodiments, when determining that service transmission can be performed at the current rate, the sink may send, to the source through the auxiliary link, information indicating that link training is completed. In a possible implementation, the information may further carry an equalization parameter obtained through link training, so that the transmitter sends the service data based on the equalization parameter.

In some other embodiments, when determining that service transmission cannot be performed at the current rate, the sink may send, to the source through the auxiliary link, information indicating that link training fails. In this case, the source adjusts a data sending rate to continue to perform link training.

When it is determined that service transmission can be performed at the current rate, the training phase may be ended. Then, the service transmission phase is performed.

S 1105. The source sends first data.

For example, after receiving the information indicating that the link training is completed, the transmitter may start to transmit the service data at the current data transmission rate and/or based on the equalization parameter fed back by the receiver. The service data may be processed based on any data structure in FIG. 4a to FIG. 7 to obtain the first data for sending.

S1106. The sink receives the first data, and determines, based on a first identifier carried in the first data, that the first data is data for performing service data transmission.

Because the data structure of the first data is the same as the data structure of the second data, the receiver may determine, after determining that the data carrying the first identifier is received, that the first data is the data for performing service data transmission. The receiver may extract a data block in the first data, and perform parsing processing, to obtain the service data that the source expects to send. In this way, the service data is received.

It may be understood that, in some implementations, an example in which there is a requirement for data availability detection is used. After receiving the first data, the receiver may perform availability detection based on a third identifier carried in the first data. After determining that the first data is available, the sink may determine that accurate and available service data is received.

With reference to the foregoing descriptions in FIG. 11, this solution can avoid problems such as a delay and a loss of service data transmission that are caused because an interface circuit needs to be switched, thereby improving data transmission quality.

For example, with reference to FIG. 12, effects brought by the solution provided in this embodiment of this application are described. FIG. 12 is a schematic diagram of timing of data exchange between the source and the sink when the solution provided in this embodiment of this application is used.

As shown in FIG. 12, the source may send training data including a TPSR and a training pattern to the sink. Before a moment T3, the sink may perform link training based on the received training data. In this example, at the moment T3, the sink may determine that the link training is completed. In this case, the sink may notify, by using an auxiliary link, the source that the link training is completed. For example, the source may start to transmit service data at a moment T4. In this example, service transmission data may be sent in a form of SR + service data 1 + SR + service data 2.... It may be understood that, between the moment T3 and the moment T4, the source may continue to send the training data to the sink. In this case, the sink may still receive the training data between the moment T3 and the moment T4. After the moment T4, the sink may receive the service transmission data.

Between the moment T3 and the moment T4, although the sink receives the training data, because the training data and the service data have a same data structure, the receiver can correctly parse the training data without changing a configuration parameter of an interface circuit. In this way, the sink can determine that the current data is for performing link training. Because the current link training has been completed, the sink may discard the data, or may not respond to the data. The receiver may determine, after receiving the first piece of service transmission data (for example, data received from the moment T4), to start to transmit the service data. Therefore, according to the solution provided in this embodiment of this application, the sink does not incorrectly parse the data, and consequently, transmission of subsequent service data is not affected.

In addition, because the training data and the service transmission data have the same data structure, a channel alignment operation, a periodic link locking operation, a character delimitation operation, and the like that have been completed by the sink in the training phase may be continuously used during transmission on a service channel, and do not need to be reprocessed after interruption. In this way, repeated redundancy processing requirements can be avoided, and system transmission efficiency can be improved.

It should be noted that in the foregoing example for describing the solution provided in this embodiment of this application, link training is performed before service data transmission. In other implementations of this application, after the service transmission phase, link training may be further performed, to further improve service data transmission quality.

For example, with reference to the solution shown in FIG. 11, the sink may receive the service transmission data from the source in the service transmission phase. In this example, the sink may determine, based on a bit error rate of received service transmission data, whether to trigger next time of link training. For example, the bit error rate may be determined by performing cyclic redundancy check (Cyclic Redundancy Check, CRC) on the received service transmission data. When the bit error rate is less than a corresponding threshold (for example, a service transmission threshold), the sink may notify, through the auxiliary path, the source to re-initiate link training. In some embodiments, the source may perform link training corresponding to the training phase shown in FIG. 11. The source may perform link training at the data transmission rate currently for sending the service data. In this way, the sink may further adjust the equalization parameter at the data transmission rate, to obtain better data transmission quality. For a specific execution process thereof, refer to the foregoing descriptions. Details are not described herein again. It should be understood that, in some implementations, the sink may also feed back a link training failure to the source when the sink determines that the bit error rate obtained at the current data transmission rate after the equalization parameter is optimized still cannot meet a transmission requirement of subsequent service data, so that the source adjusts the data transmission rate to continue to perform link training.

In the foregoing example, that the source determines, based on the bit error rate corresponding to the service transmission data, whether to trigger next time of link training is used as an example. In some other implementations of this application, the source and/or the sink may further trigger next time of link training based on a preset period, to determine whether better data transmission quality can be obtained at the current data transmission rate by adjusting the equalization parameter.

In this way, even if service data transmission has started, the source may trigger link training again, to obtain better data transmission quality. It may be understood that, in this example, because the normalized data structure provided in embodiments of this application is used for the service transmission data transmitted in the service transmission phase and the training data transmitted in the link training, smooth switching may be implemented in a process of switching from the service transmission phase to the training phase, and a problem such as a data transmission failure caused by different data structures of transmitted data is not generated.

The foregoing describes the solution provided in embodiments of this application mainly from a perspective of the source and the sink. To implement the foregoing functions, corresponding hardware structures and/or software modules for performing the functions are included. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device related to the foregoing method examples may be divided into function modules based on the foregoing method examples. For example, each function module corresponding to each function may be obtained through division, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

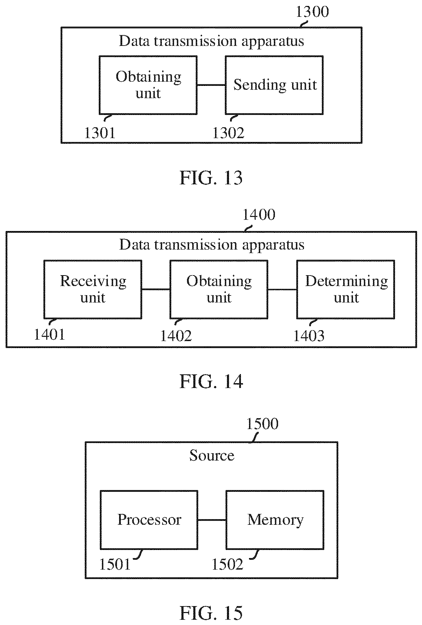

FIG. 13 is a schematic composition diagram of a data transmission apparatus 1300 according to an embodiment of this application. The data transmission apparatus 1300 may be used in a source.

As shown in FIG. 13, the data transmission apparatus 1300 may include: an obtaining unit 1301, configured to obtain service data; and a sending unit 1302, configured to send first data, where the first data is obtained based on the service data, where a data structure of the first data is the same as a data structure of second data, the second data is for performing link training, and the link training is performed before the first data is sent.

In a possible design, the first data includes a first identifier, and the first identifier identifies that the first data is data that is in service data transmission.

In a possible design, the sending unit 1302 is further configured to send the second data, where the second data is obtained based on a training pattern, and the training pattern is for performing the link training. The second data includes a second identifier, and the second identifier indicates that the second data is for performing the link training.

In a possible design, that a data structure of the first data is the same as a data structure of second data includes: the first data includes at least two first identifiers that are spaced from each other, there is a same spacing between every two adjacent first identifiers, and the service data is arranged between two adjacent first identifiers; the second data includes at least two second identifiers that are spaced from each other, there is a same spacing between every two adjacent second identifiers, and the training pattern is arranged between two adjacent second identifiers; and a spacing between any two adjacent first identifiers is the same as a spacing between any two adjacent second identifiers.

In a possible design, the first data further includes a third identifier, where the third identifier is for character delimitation, inter-channel alignment processing, and/or periodic link locking detection during transmission of the service data; and the third identifier is arranged between the first identifier and the service data.

In a possible design, the second data further includes a fourth identifier, where the fourth identifier is for character delimitation, inter-channel alignment processing, and/or periodic link locking detection during the link training; and the fourth identifier is arranged between the second identifier and the training pattern.

In a possible design, the first identifier is a special character scramble reset SR; and the second identifier is a special character training pattern scramble reset TPSR.

It should be noted that all related content of the steps in the foregoing method embodiments may be cited in function description of corresponding function modules. Details are not described herein again.

FIG. 14 is a schematic composition diagram of another data transmission apparatus 1400 according to an embodiment of this application. The data transmission apparatus 1400 may be used in a sink.

As shown in FIG. 14, the data transmission apparatus 1400 may include: a receiving unit 1401, configured to receive first data, where the first data is obtained based on service data; and an obtaining unit 1402, configured to obtain the service data based on the first data, where a data structure of the first data is the same as a data structure of second data, the second data is for performing link training, and the link training is performed before the first data is sent.

In a possible design, the first data includes a first identifier, and the first identifier identifies that the first data is data that is in service data transmission.

In a possible design, the receiving unit 1401 is further configured to receive the second data, where the second data is obtained based on a training pattern, and the training pattern is for performing the link training. The second data includes a second identifier, and the second identifier indicates that the second data is for performing the link training.

In a possible design, the apparatus further includes: a determining unit 1403, configured to determine an equalization parameter based on the second data. The receiving unit 1401 is further configured to receive the second data based on the equalization parameter.

In a possible design, that a data structure of the first data is the same as a data structure of second data includes: the first data includes at least two first identifiers that are spaced from each other, there is a same spacing between every two adjacent first identifiers, and the service data is arranged between two adjacent first identifiers; the second data includes at least two second identifiers that are spaced from each other, there is a same spacing between every two adjacent second identifiers, and the training pattern is arranged between two adjacent second identifiers; and a spacing between any two adjacent first identifiers is the same as a spacing between any two adjacent second identifiers.

In a possible design, the first data further includes a third identifier, where the third identifier is for character delimitation, inter-channel alignment processing, and/or periodic link locking detection during transmission of the service data; and the third identifier is arranged between the first identifier and the service data.

In a possible design, the second data further includes a fourth identifier, where the fourth identifier is for character delimitation, inter-channel alignment processing, and/or periodic link locking detection during the link training; and the fourth identifier is arranged between the second identifier and the training pattern.

In a possible design, the first identifier is a special character scramble reset SR; and the second identifier is a special character training pattern scramble reset TPSR.

It should be noted that all related content of the steps in the foregoing method embodiments may be cited in function description of corresponding function modules. Details are not described herein again.

FIG. 15 is a schematic composition diagram of a source 1500. As shown in FIG. 15, the source 1500 may include a processor 1501 and a memory 1502. The memory 1502 is configured to store computer-executable instructions. For example, in some embodiments, when the processor 1501 executes the instructions stored in the memory 1502, the source 1500 may be enabled to perform the data transmission method in any one of the foregoing embodiments.

In some other embodiments of this application, the source (or referred to as a source apparatus) may include a processor and a communication interface, configured to support the source in implementing the functions in the foregoing embodiments. In a possible design, the source apparatus further includes a memory, configured to store program instructions and data that are necessary for a terminal. The source apparatus may include a chip, or may include a chip and another discrete component. It should be noted that in some implementations of this application, the communication interface may also be referred to as an interface circuit.

It should be noted that all related content of the steps in the foregoing method embodiments may be cited in function description of corresponding function modules. Details are not described herein again.

An embodiment of this application further provides a sink. In some embodiments, composition of the sink may be the same as or similar to composition of the source 1500 shown in FIG. 15. For example, the sink may include a processor and a memory. The memory is configured to store computer-executable instructions. For example, in some embodiments, when the processor executes the instructions stored in the memory, the sink may be enabled to perform the data transmission method in any one of the foregoing embodiments.

In some other embodiments of this application, the sink (or referred to as a sink apparatus) may include a processor and a communication interface, configured to support the source in implementing the functions in the foregoing embodiments. In a possible design, the source apparatus further includes a memory, configured to store program instructions and data that are necessary for a terminal. The source apparatus may include a chip, or may include a chip and another discrete component. It should be noted that in some implementations of this application, the communication interface may also be referred to as an interface circuit.

It should be noted that all related content of the steps in the foregoing method embodiments may be cited in function description of corresponding function modules. Details are not described herein again.

All or a part of functions, actions, operations, steps, and the like in the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data transmission method, wherein the method comprises:
obtaining service data; and
sending first data, wherein the first data is obtained based on the service data, wherein
a data structure of the first data is the same as a data structure of second data, the second data is for performing link training, and the link training is performed before the first data is sent.

2. The method according to claim 1, wherein
the first data comprises a first identifier, and the first identifier identifies that the first data is data that is in service data transmission.

3. The method according to claim 1 or 2, wherein before the sending first data, the method further comprises:
sending the second data, wherein the second data is obtained based on a training pattern, and the training pattern is for performing the link training; and
the second data comprises a second identifier, and the second identifier indicates that the second data is for performing the link training.

4. The method according to claim 3, wherein that a data structure of the first data is the same as a data structure of second data comprises:
the first data comprises at least two first identifiers that are spaced from each other, there is a same spacing between every two adjacent first identifiers, and the service data is arranged between two adjacent first identifiers;
the second data comprises at least two second identifiers that are spaced from each other, there is a same spacing between every two adjacent second identifiers, and the training pattern is arranged between two adjacent second identifiers; and
a spacing between any two adjacent first identifiers is the same as a spacing between any two adjacent second identifiers.

5. The method according to any one of claims 2 to 4, wherein
the first data further comprises a third identifier, wherein the third identifier is for character delimitation, inter-channel alignment processing, and/or periodic link locking detection during transmission of the service data; and
the third identifier is arranged between the first identifier and the service data.

6. The method according to any one of claims 3 to 5, wherein
the second data further comprises a fourth identifier, wherein the fourth identifier is for character delimitation, inter-channel alignment processing, and/or periodic link locking detection during the link training; and
the fourth identifier is arranged between the second identifier and the training pattern.

7. The method according to any one of claims 3 to 6, wherein
the first identifier is a special character scramble reset SR; and
the second identifier is a special character training pattern scramble reset TPSR.

8. A data transmission method, wherein the method comprises:
receiving first data, wherein the first data is obtained based on service data; and
obtaining the service data based on the first data, wherein
a data structure of the first data is the same as a data structure of second data, the second data is for performing link training, and the link training is performed before the first data is received.

9. The method according to claim 8, wherein
the first data comprises a first identifier, and the first identifier identifies that the first data is data that is in service data transmission.

10. The method according to claim 8 or 9, wherein before the receiving first data, the method further comprises:
receiving the second data, wherein the second data is obtained based on a training pattern, and the training pattern is for performing the link training; and
the second data comprises a second identifier, and the second identifier indicates that the second data is for performing the link training.

11. The method according to claim 10, wherein the method further comprises:
determining an equalization parameter based on the second data; and
the receiving first data comprises:
receiving the first data based on the equalization parameter.

12. The method according to claim 10 or 11, wherein that a data structure of the first data is the same as a data structure of second data comprises:
the first data comprises at least two first identifiers that are spaced from each other, there is a same spacing between every two adjacent first identifiers, and the service data is arranged between two adjacent first identifiers;
the second data comprises at least two second identifiers that are spaced from each other, there is a same spacing between every two adjacent second identifiers, and the training pattern is arranged between two adjacent second identifiers; and
a spacing between any two adjacent first identifiers is the same as a spacing between any two adjacent second identifiers.

13. The method according to any one of claims 9 to 12, wherein
the first data further comprises a third identifier, wherein the third identifier is for character delimitation, inter-channel alignment processing, and/or periodic link locking detection during transmission of the service data; and
the third identifier is arranged between the first identifier and the service data.

14. The method according to any one of claims 10 to 13, wherein
the second data further comprises a fourth identifier, wherein the fourth identifier is for character delimitation, inter-channel alignment processing, and/or periodic link locking detection during the link training; and
the fourth identifier is arranged between the second identifier and the training pattern.

15. The method according to any one of claims 10 to 14, wherein
the first identifier is a special character scramble reset SR; and
the second identifier is a special character training pattern scramble reset TPSR.

16. A data transmission apparatus, wherein the apparatus comprises:
an obtaining unit, configured to obtain second data; and
a sending unit, configured to send first data, wherein the first data is obtained based on the service data, wherein
a data structure of the first data is the same as a data structure of second data, the second data is for performing link training, and the link training is performed before the first data is sent.

17. The apparatus according to claim 16, wherein
the first data comprises a first identifier, and the first identifier identifies that the first data is data that is in service data transmission.

18. The apparatus according to claim 16 or 17, wherein
the sending unit is further configured to send the second data, wherein the second data is obtained based on a training pattern, and the training pattern is for performing the link training; and
the second data comprises a second identifier, and the second identifier indicates that the second data is for performing the link training.

19. The apparatus according to claim 18, wherein that a data structure of the first data is the same as a data structure of second data comprises:
the first data comprises at least two first identifiers that are spaced from each other, there is a same spacing between every two adjacent first identifiers, and the service data is arranged between two adjacent first identifiers;
the second data comprises at least two second identifiers that are spaced from each other, there is a same spacing between every two adjacent second identifiers, and the training pattern is arranged between two adjacent second identifiers; and
a spacing between any two adjacent first identifiers is the same as a spacing between any two adjacent second identifiers.

20. The apparatus according to any one of claims 17 to 19, wherein
the first data further comprises a third identifier, wherein the third identifier is for character delimitation, inter-channel alignment processing, and/or periodic link locking detection during transmission of the service data; and
the third identifier is arranged between the first identifier and the service data.

21. The apparatus according to any one of claims 18 to 20, wherein
the second data further comprises a fourth identifier, wherein the fourth identifier is for character delimitation, inter-channel alignment processing, and/or periodic link locking detection during the link training; and
the fourth identifier is arranged between the second identifier and the training pattern.

22. The apparatus according to any one of claims 18 to 21, wherein
the first identifier is a special character scramble reset SR; and
the second identifier is a special character training pattern scramble reset TPSR.

23. A data transmission apparatus, wherein the apparatus comprises:
a receiving unit, configured to receive first data, wherein the first data is obtained based on service data; and
an obtaining unit, configured to obtain the service data based on the first data, wherein
a data structure of the first data is the same as a data structure of second data, the second data is for performing link training, and the link training is performed before the first data is sent.

24. The apparatus according to claim 23, wherein
the first data comprises a first identifier, and the first identifier identifies that the first data is data that is in service data transmission.

25. The apparatus according to claim 23 or 24, wherein
the receiving unit is further configured to receive the second data, wherein the second data is obtained based on a training pattern, and the training pattern is for performing the link training; and
the second data comprises a second identifier, and the second identifier indicates that the second data is for performing the link training.

26. The apparatus according to claim 25, wherein the apparatus further comprises:
a determining unit, configured to determine an equalization parameter based on the second data; and
the receiving unit is further configured to receive the second data based on the equalization parameter.

27. The apparatus according to claim 25 or 26, wherein that a data structure of the first data is the same as a data structure of second data comprises:
the first data comprises at least two first identifiers that are spaced from each other, there is a same spacing between every two adjacent first identifiers, and the service data is arranged between two adjacent first identifiers;
the second data comprises at least two second identifiers that are spaced from each other, there is a same spacing between every two adjacent second identifiers, and the training pattern is arranged between two adjacent second identifiers; and
a spacing between any two adjacent first identifiers is the same as a spacing between any two adjacent second identifiers.

28. The apparatus according to any one of claims 24 to 27, wherein
the first data further comprises a third identifier, wherein the third identifier is for character delimitation, inter-channel alignment processing, and/or periodic link locking detection during transmission of the service data; and
the third identifier is arranged between the first identifier and the service data.

29. The apparatus according to any one of claims 25 to 28, wherein
the second data further comprises a fourth identifier, wherein the fourth identifier is for character delimitation, inter-channel alignment processing, and/or periodic link locking detection during the link training; and
the fourth identifier is arranged between the second identifier and the training pattern.

30. The apparatus according to any one of claims 25 to 29, wherein
the first identifier is a special character scramble reset SR; and
the second identifier is a special character training pattern scramble reset TPSR.

31. A source apparatus, wherein the source comprises one or more processors and a transmission interface, the one or more processors send or receive data through the transmission interface, and the one or more processors are configured to invoke program instructions stored in one or more memories, so that the source apparatus performs the data transmission method according to any one of claims 1 to 7.

32. A sink apparatus, wherein the source comprises one or more processors and a transmission interface, the one or more processors send or receive data through the transmission interface, and the one or more processors are configured to invoke program instructions stored in one or more memories, so that the source apparatus performs the data transmission method according to any one of claims 8 to 15.

33. A computer-readable storage medium, wherein the computer-readable storage medium stores program instructions; and when the program instructions are executed on a computer or a processor, the data transmission method according to any one of claims 1 to 7 or the data transmission method according to any one of claims 8 to 15 is performed.
